**Europäisches Patentamt**

**European Patent Office**

**Office européen des brevets**

(11) Numéro de publication : **0 434 550 B1**

(12) **FASCICULE DE BREVET EUROPEEN**

(45) Date de publication du fascicule du brevet :
**08.02.95 Bulletin 95/06**

(21) Numéro de dépôt : **90403655.5**

(22) Date de dépôt : **18.12.90**

(51) Int. Cl.⁶ : **G07F 7/10**

(54) **Procédé de génération d'un nombre aléatoire dans un système à objets portatifs électroniques, et système pour la mise en oeuvre du procédé.**

(30) Priorité : **19.12.89 FR 8916769**

(43) Date de publication de la demande :
**26.06.91 Bulletin 91/26**

(45) Mention de la délivrance du brevet :
**08.02.95 Bulletin 95/06**

(84) Etats contractants désignés :
**AT BE CH DE DK ES FR GB GR IT LI LU NL SE**

(56) Documents cités :
**EP-A- 0 231 702
EP-A- 0 281 057
EP-A- 0 281 059
FR-A- 2 601 535
COMPUTER NETWORK & ISND SYSTEMS, vol.
14, nos. 2 - 5, 1987, pages 389 -395; Ph. VAN
HEURCK: "TRASEC: National security system
for EFTs in Belgium"**

(73) Titulaire : **BULL CP8
Rue Eugène Hénaff
BP 45
F-78190 Trappes (FR)**

(72) Inventeur : **Hazard, Michel
27, Rue des Harias
F-78124 Mareil sur Mauldre (FR)**

(74) Mandataire : **Corlu, Bernard Edouard et al
Bull S.A.
Direction de la Propriété Intellectuelle Bull
S.A.
Poste Courrier LV/59018
68, Route de Versailles
F-78430 Louveciennes - B.P. 45 (FR)**

Jouve, 18, rue Saint-Denis, 75001 PARIS

## Description

L'invention est relative à un procédé de génération d'un nombre aléatoire dans un système à objets portatifs électroniques tels que des cartes à mémoire et à microcircuits, et à un système pour la mise en oeuvre de ce procédé.

L'essor des applications qui mettent en oeuvre des objets portatifs, tels que des cartes à mémoire et microcircuits, est essentiellement dû au fait que ces cartes possèdent des circuits de traitement qui comprennent généralement un microprocesseur qui peut effectuer des calculs, non seulement sur des données entrées de l'extérieur, mais encore sur des données internes et inaccessibles de l'extérieur.

De telles cartes sont distribuées à des utilisateurs par des organismes habilités qui proposent la délivrance de services par l'intermédiaire d'appareils ou de terminaux mis à la disposition du public et auxquels l'utilisateur accouple temporairement l'objet portatif qui lui a été remis, au moment de la demande d'une prestation de service.

Selon la nature du service rendu à l'aide d'un objet portatif déterminé, il peut être nécessaire que les données qui transitent entre l'objet portatif et le terminal conservent une certaine confidentialité, et en conséquence, les systèmes utilisant des objets portatifs, tels que des cartes à microcircuits, sont agencés de façon à pouvoir effectuer du chiffrement (encore appelé encryptage) de ces données qui transitent. A cet effet, des programmes de chiffrement sont enregistrés à l'intérieur des circuits de traitement des objets portatifs, de même que des programmes de chiffrement sont enregistrés à l'intérieur des circuits des terminaux associés. Par ailleurs, ces programmes utilisent généralement des clés pour chiffrer des données, et en conséquence, les clés secrètes de chiffrement sont généralement enregistrées dans les objets portatifs et dans les terminaux associés. Ces clés sont dites secrètes lorsqu'elles ne sont accessibles que par les circuits de traitement de l'organe du système dans lequel elles sont enregistrées. En contrepartie, les circuits de traitement des objets portatifs et des terminaux doivent mémoriser des programmes de déchiffrement correspondants.

Par ailleurs, de nombreuses fonctions permettant que ces transactions s'effectuent en toute sécurité, ont été prévues, et sont décrites et protégées par un certain nombre de brevets au nom de la demanderesse. On a ainsi prévu des procédés qui permettent de vérifier qu'une donnée décodée correspond effectivement à la donnée d'origine, et qu'il n'y a pas eu d'altération pendant la transmission ; on a également prévu des procédés d'authentification réciproques du terminal par l'objet portatif auquel il est connecté, et de l'objet portatif par le terminal, afin que d'une part le terminal puisse être certain que l'objet portatif qui lui est connecté est effectivement prévu pour le service considéré, ou bien que l'objet portatif puisse vérifier qu'il est effectivement connecté à un terminal prévu pour le service.

Ces différentes fonctions nécessitent souvent pour leur mise en oeuvre des données secrètes, spécifiques à l'application considérée, qui ne doivent pas pouvoir être décodées de l'extérieur.

Les différentes fonctions qui viennent d'être évoquées sont utilisables lorsqu'un objet portatif a été mis en circulation par un prestataire de service, et également avant que les objets portatifs ne soient mis en service, lors de la phase dite de personnalisation de ces objets portatifs qui consiste à introduire dans leur mémoire les données spécifiques à l'application pour laquelle l'objet pourrait être utilisé, dont certaines sont secrètes. Lors de la personnalisation, il faut donc parfois effectuer des opérations de chiffrement, de même qu'il faut mettre en oeuvre les fonctions de vérification évoquées.

Par ailleurs, dans certains cas, le chiffrement de données est subordonné non seulement à la prise en compte d'une clé secrète de chiffrement, mais encore à la prise en compte d'un nombre aléatoire, ce qui permet que lors du chiffrement d'une même donnée prenant en compte, entre autre, des nombres aléatoires différents, il apparaît un message codé différent. Ainsi, un fraudeur qui observerait la donnée entrée pourrait difficilement simuler à l'avance le résultat du chiffrement.

De nombreuses demandes de brevets, au nom de la demanderesse ou de tiers, parmi lesquelles on peut citer la demande de brevet français publiée sous le N° 2 601 535, au nom de la demanderesse, font mention de systèmes mettant en oeuvre des algorithmes de chiffrement et de déchiffrement de données, et montrant diverses façons d'utiliser des nombres aléatoires, en particulier dans les systèmes à cartes à microcircuits.

Dans de tels systèmes, on emploie généralement le terme de nombre aléatoire pour désigner en fait le résultat d'un calcul effectué sur des paramètres déterminés, qui peuvent être contenus dans certaines zones de mémoire de l'objet portatif. Il en résulte que, si les paramètres utilisés pour le calcul d'un nombre aléatoire se retrouvent à l'identique lors de deux calculs différents, alors le résultat de ces deux calculs est le même.

Ainsi, un fraudeur compétent qui observerait à chaque tirage de nombre aléatoire la valeur des paramètres servant de base au calcul dudit nombre, et noterait quel nombre aléatoire est obtenu pour chaque combinaison de paramètres, serait en mesure de déterminer par avance quel serait le prochain nombre aléatoire calculé, si les paramètres servant de base à son calcul venaient à reprendre une valeur identique à une valeur que le fraudeur aurait pu observer précédemment. En conséquence, le fraudeur serait en mesure de déterminer à l'avance le résultat du chiffrement d'une donnée antérieurement chiffrée avec le même nombre aléatoire.

C'est pourquoi, afin que le système soit le plus fiable possible, il convient de réduire le plus possible, sinon de rendre nulle la probabilité qu'une même combinaison de paramètres se retrouve à l'identique lors des utilisations de ces systèmes, afin de limiter le plus possible les risques de fraude.

Dans certains modes d'exploitation, le nombre aléatoire est calculé par l'objet portatif en utilisant, pour l'obtenir, des paramètres ou données qui sont contenues dans la mémoire de l'objet portatif.

Ainsi, dans la demande de brevet français publiée sous le N° 2 601 535, au nom de la demanderesse, on prévoit qu'un nombre aléatoire est obtenu à partir de paramètres prélevés dans la zone de contrôle de la mémoire, c'est-à-dire dans une zone de la mémoire où le contenu est modifié à chaque utilisation de la carte, afin de mémoriser par exemple des tentatives frauduleuses d'utilisation, ou bien encore des erreurs, ou bien tout autre type d'opérations de contrôle requises par l'utilisation particulière pour laquelle est prévu un objet portatif considéré. Plus précisément, on prélève dans la zone de contrôle de la mémoire, le mot de la zone de contrôle qui a été modifié lors de la dernière utilisation. Le nombre aléatoire peut résulter d'un chiffrement de ce mot de la zone de contrôle modifié lors de la dernière utilisation. Or, afin d'économiser de la mémoire, généralement la zone de contrôle est modifiée bit par bit, et non mot par mot. Il en résulte que, puisqu'une mémoire est normalement divisée en mots de n bits, chaque mot étant situé à une adresse différente, le contenu d'un mot situé à une adresse donnée est susceptible d'être modifié n fois, de sorte que le contenu d'un mot situé à une adresse donnée de la mémoire de contrôle peut être utilisé n fois pour constituer le nombre aléatoire, sa valeur changeant à chacune de ces n fois, de sorte qu'à chaque changement, le nombre aléatoire résultant devient imprévisible.

Cependant, cette solution n'est pas totalement satisfaisante, puisqu'à l'issue de ces n changements, le nombre aléatoire sera obtenu en prélevant un mot situé à une adresse différente de la zone de contrôle. Cependant, le contenu de ce mot situé à une adresse différente est susceptible de prendre successivement les configurations du mot d'adresse précédente, de sorte que l'on peut retrouver les mêmes nombres aléatoires. En conséquence, un fraudeur qui aurait observé la série précédente de nombres aléatoires serait en mesure de déterminer le résultat des chiffrements ultérieurs, au cas où un nombre aléatoire déjà utilisé serait à nouveau utilisé pour chiffrer une même donnée. C'est pourquoi, dans cette demande, on a envisagé d'utiliser non seulement le contenu d'un mot de la zone de contrôle situé à une adresse donnée, mais également un élément prenant en compte la valeur de l'adresse elle-même, de sorte que le nombre aléatoire est obtenu à partir d'un calcul prenant en compte la valeur du mot et son adresse.

Cette solution s'avère satisfaisante sur le plan de la consommation mémoire, puisque le nombre aléatoire est calculé à partir de données nécessaires à l'exploitation du système.

Cependant, dans certaines applications, la zone de contrôle peut n'être modifiée qu'une seule fois lors d'une session, c'est-à-dire entre le moment où l'objet portatif est connecté au terminal et le moment où il est déconnecté, alors que lors de la session en cours, les circuits de traitement du système peuvent requérir plusieurs fois l'utilisation d'un nombre aléatoire. Dans un tel cas, les calculs successifs d'un nombre aléatoire procureraient le même résultat, puisque les paramètres n'auraient pas évolué.

L'invention a donc pour objet de remédier à ces inconvénients, en proposant un procédé qui permet d'obtenir, dans un système à cartes à microcircuits, des nombres que l'on peut qualifier d'aléatoires, lorsqu'ils sont considérés par un observateur extérieur, dans la mesure où la combinaison des paramètres servant de base à leur calcul ne se retrouve pas deux fois à l'identique lors des utilisations du système. Le procédé selon l'invention doit également permettre d'obtenir des nombres aléatoires autant de fois que nécessaire, que ce soit lors d'une même session, ou lors de sessions distinctes, sans que la consommation de mémoire s'en trouve sensiblement affectée.

L'invention concerne à cet effet un procédé de génération d'un nombre aléatoire dans un système à objets portatifs, tels que des cartes à mémoires électroniques et à microcircuits, du genre consistant à faire générer par les circuits de traitement (TC) d'un objet portatif chaque nombre aléatoire requis lors du traitement de données, lorsque l'objet portatif est connecté à un appareil de traitement, ledit procédé consistant à exécuter un programme de calcul enregistré dans les circuits de l'objet et prenant en compte, à chaque demande de nombre aléatoire lors d'une session, au moins un premier paramètre (PA1) constitué par la donnée d'un champ (RB) d'une zone mémoire de l'objet, ladite donnée étant modifiée suite à chaque demande de nombre aléatoire lors d'une session, et un second paramètre (PA2).

Un tel procédé est connu de EP-A- 231 702.

Selon l'invention, ladite zone mémoire est volatile et le second paramètre est constitué par une donnée d'une autre zone mémoire de l'objet, ladite donnée étant modifiée au moins une fois lors de chaque session et étant conservée entre la fin d'une session et la session suivante, cette autre zone étant par ailleurs telle que le second paramètre (PA2) n'est pas susceptible d'avoir deux fois la même valeur au cours de la durée de vie de la carte.

Dans un mode de mise en oeuvre préféré de l'invention, le premier paramètre est constitué par la valeur du contenu d'un champ possédant une adresse précise, d'une zone de mémoire volatile de la carte, ce champ servant à mémoriser le dernier nombre aléatoire calculé lors de la session en cours. Etant donné que le champ en question est dans une zone de mémoire volatile, il perd son contenu lors de la mise hors tension des circuits de la carte, de sorte qu'après la réinitialisation des circuits de la carte qui fait suite à la remise sous tension, le contenu du champ considéré se retrouve à l'identique d'une session à l'autre.

Ceci n'a aucune espèce d'importance, puisque d'une session à l'autre, le second paramètre, qui est prélevé à partir d'une zone de mémoire non volatile entre deux sessions, est modifié, de sorte que même si le premier paramètre possède une valeur identique au début de chaque session, il en résulte que le premier nombre aléatoire calculé lors d'une session n'est pas prévisible, puisqu'il dépend de la valeur d'au moins deux paramètres, dont un (le second) ne peut pas retrouver deux fois la même valeur lors de la durée de vie de la carte.

Dans un mode de mise en oeuvre, le second paramètre est prélevé dans une zone de mémoire spécifique, non volatile d'une session à l'autre, mais dont le contenu peut être modifié sur requête du microprocesseur incorporé dans la carte, par exemple après la réinitialisation des circuits faisant suite à la remise sous tension, au début d'une session. En conséquence, ladite zone de mémoire spécifique, qui contient le second paramètre est par exemple une zone de mémoire effaçable et reprogrammable électriquement (mémoire de type EEPROM), et le second paramètre est constitué par le contenu d'un champ précis de cette zone.

Dans un mode de mise en oeuvre préféré, afin que le second paramètre ne retrouve pas deux fois la même valeur lors de la durée de vie de la carte, on contrôle sa valeur en l'incrémentant d'une session à l'autre.

De préférence, au moins l'un des éléments pris en compte pour le calcul d'un nombre aléatoire est secret. De préférence, l'élément secret est l'un des paramètres utilisés lors du calcul. Cette précaution permet d'éviter qu'un fraudeur ait à sa disposition l'ensemble des éléments pris en compte pour le calcul du nombre aléatoire, et puisse simuler par avance le résultat d'un calcul ultérieur.

L'invention concerne aussi un objet portatif électronique, tel qu'une carte à mémoire (MC) et microcircuits de traitement (TC), pour la mise en oeuvre du procédé selon l'invention, agencé pour exécuter un programme de calcul du nombre aléatoire, mémorisé dans une zone mémoire non volatile en prenant en compte, à chaque demande de nombre aléatoire lors d'une session, au moins un premier paramètre (PA1) constitué par la donnée d'un champ (RB) d'une zone mémoire de l'objet, ladite donnée étant modifiée suite à chaque demande de nombre aléatoire lors d'une session, et un second paramètre (PA2) variable. Selon l'invention, ladite zone mémoire est volatile et le second paramètre est constitué par une donnée d'une autre zone mémoire de l'objet, ladite donnée étant modifiée au moins une fois lors de chaque session et étant conservée entre la fin d'une session et la session suivante, cette autre zone étant par ailleurs telle que le second paramètre (PA2) n'est pas susceptible d'avoir deux fois la même valeur au cours de la durée de vie de la carte.

D'autres caractéristiques et avantages apparaîtront avec la description ci-après, faite en regard des figures annexées sur lesquelles :
- la figure 1 est un schéma de principe d'un système pour la mise en oeuvre de l'invention ;
- la figure 2 illustre une variante d'organisation de la mémoire d'un objet portatif pour la mise en oeuvre de l'invention ;
- la figure 3 illustre le principe du calcul d'un nombre aléatoire ;
- les figures 4 et 5A et 5B illustrent une façon dont le second paramètre peut être modifié ;
- les figures 6A-6B et 7A-7B illustrent deux variantes d'organisation de la mémoire d'un objet portatif.

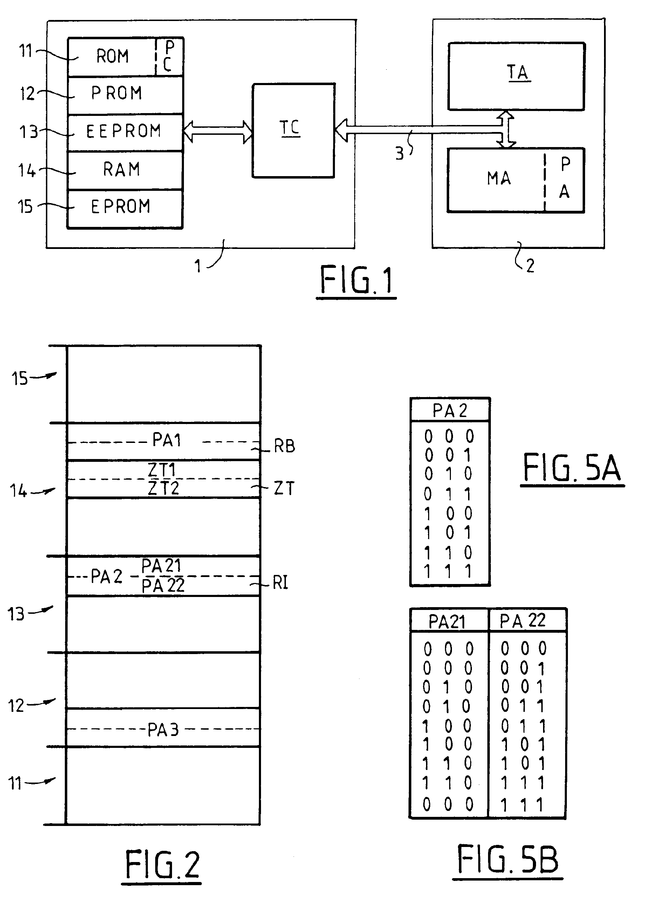

Sur la figure 1, on a illustré les éléments minima qui sont nécessaires pour qu'une carte à mémoire puisse fonctionner et être utilisée. La présente invention est utilisable pour la génération d'un nombre aléatoire quelle que soit la phase de vie de la carte. Ainsi, l'invention peut s'appliquer à la génération d'un nombre aléatoire lors de la personnalisation de la carte, c'est-à-dire lors d'une phase qui suit immédiatement la fabrication de la carte, et qui consiste à introduire des données secrètes ou non qui seront nécessaires pour l'exploitation de la carte considéré.

Elle s'applique également lorsque la carte a été remise à un utilisateur final, dès lors qu'il est nécessaire de générer des nombres aléatoires lorsque la carte est utilisée.

Pour être utilisée, une carte à mémoire (1) doit être connectée à un appareil (2) qui peut être un terminal ou un appareil de transaction. La carte (1) et l'appareil (2) sont reliés par l'intermédiaire d'une liaison de transmission (3). La liaison peut être électrique, et dans ce cas la carte est pourvue de plages de contact qui sont destinées à venir s'interconnecter avec des plages de contact correspondantes d'un connecteur incorporé à l'appareil (2) ; la liaison pourrait également être optique, magnétique, ou autres, sans que cela sorte du cadre de la présente invention.

Un type de liaison de transmission utilisable dans un tel système est décrit dans le brevet français N° 2 483 713, au nom de la demanderesse, et intitulé : "Dispositif pour la transmission de signaux entre deux stations de traitement de l'information" (ce brevet français correspond au brevet américain N° 4 556 958).

La carte (1) contient au moins une mémoire (MC) et des circuits de traitement (TC) de données, permettant de traiter les données contenues dans la mémoire (MC) de la carte, ou bien des données provenant de l'extérieur, par exemple des données provenant directement de l'appareil (2), ou bien relayées par celui-ci, dans le cas où le système comporte plusieurs appareils interconnectés formant un réseau.

De façon connue en soi, la mémoire (MC) de la carte peut être partitionnée en plusieurs zones mémoire différentes, que l'on distingue les unes des autres par leur nature électronique. Chaque zone possède, par ailleurs, un certain nombre de mots mémoire repérables chacun par leur adresse dans la zone.

Ainsi, la mémoire (MC) de la carte (1) peut contenir une première zone (11) de mémoire ROM, c'est-à-dire une zone de mémoire non volatile, qui contient en particulier les données constituant les instructions d'un programme (PC) exécutables par les circuits de traitement (TC) de la carte. Cette première zone (11) de mémoire non volatile est programmée une fois pour toutes.

La mémoire (MC) peut contenir également une seconde zone (12) de mémoire non volatile, qui est cependant programmable pendant la durée de vie de la carte, par exemple sous contrôle des circuits de traitement (TC) de cette dernière, en respectant des conditions d'accès qui sont gérées par le programme (PC). Cette seconde zone (12) est de type PROM. C'est dans cette zone que sont inscrites les informations ou données de personnalisation de chaque carte, telles que le numéro de série, des codes secrets permettant l'accès au système, après un contrôle d'un code correspondant entré sur un clavier d'un appareil de transaction, tel que l'appareil (2), et d'une façon générale tous types de données, secrètes ou non, qui apparaîtraient en cours d'utilisation de la carte, et qu'il serait nécessaire de conserver pendant toute la durée de vie restante de celle-ci. Ainsi, par exemple, dans certaines applications, la carte est fournie à son utilisateur final avec un code secret prédéterminé par le prestataire de service qui lui fournit cette carte. Dans certains cas, on autorise l'utilisateur à modifier son code secret, pour en introduire un qu'il aura délibérément composé. Un tel code modifié est mémorisé dans cette seconde zone (12) de type PROM. C'est également dans cette zone que peut être constituée la mémoire d'état qui a été mentionnée dans le préambule de la présente demande, et qui sert à mémoriser, par exemple, les tentatives d'accès ou le nombre d'opérations effectuées avec la carte (1) depuis sa première utilisation.

Comme évoqué précédemment, cette seconde zone (12) de mémoire peut contenir les informations qui doivent rester secrètes vis-à-vis de l'extérieur, telles que les codes d'accès, ce qui signifie que seuls les circuits de traitement (TC) de la carte pourront exploiter ces informations, alors que d'autres parties de cette seconde zone sont accessibles en lecture et/ou en écriture indifféremment par les circuits de traitement (TC) de la carte ou par les circuits de traitement (TA) de l'appareil (2). Cette structure est bien connue de l'art antérieur, et est notamment mise en oeuvre depuis de nombreuses années sur les produits de la demanderesse.

Une carte pour la mise en oeuvre du procédé de la présente invention comporte une troisième zone (13) de mémoire de type EEPROM, c'est-à-dire une mémoire non volatile lorsque l'alimentation électrique de la carte n'est plus assurée, mais qui peut cependant être modifiée sur requête des circuits de traitement, ou sur requête extérieure, soit mot par mot, soit en partie, ou bien encore dans sa totalité. Une telle zone de mémoire est couramment appelée zone de mémoire effaçable et reprogrammable électriquement.

Dans un mode de mise en oeuvre préféré, la présente invention exploite la présence de cette troisième zone d'une façon particulièrement avantageuse, pour obtenir des nombres aléatoires sans consommation excessive de mémoire.

Il faut noter que l'emploi de zones de mémoire de type EEPROM a été envisagé depuis déjà un certain temps, dans les cartes à mémoire, pour augmenter la durée d'utilisation de ces cartes. En effet, bien que l'on arrive à des possibilités d'intégration de composants de plus en plus performantes, il n'empêche que la capacité de mémoire d'objets portatifs, tels que des cartes à microcircuits, est limitée. Or, une carte à mémoire est un support d'informations qui contient des informations qui doivent demeurer permanentes, telles que les informations permettant d'identifier le porteur de la carte, et/ou des informations qui ne peuvent être utiles que temporairement. Ainsi, dans des applications bancaires ou monétaires, une information telle que le solde d'un compte est une information qui évolue. Dans les premiers types de cartes à mémoire, on envisageait d'inscrire une telle information dans la zone de mémoire de type PROM, c'est-à-dire la zone de mémoire inscriptible, mais non volatile par la suite. Il en résulte que lorsqu'un nouveau solde devait être inscrit, le solde précédent était conservé, ce qui consommait de la mémoire inutilement. Pour un même type d'utilisation, c'est-à-dire l'utilisation bancaire ou monétaire, l'emploi d'une mémoire de type EEPROM permet que ce genre d'information qui n'est pas utile pendant toute la durée de vie de la carte, mais qu'il faut cependant conserver temporairement, soit mémorisée.

Dans tous les types d'applications, il existe des informations ou des données qu'il n'est pas nécessaire de conserver éternellement, et une mémoire de type EEPROM est particulièrement adaptée dans ce cas.

La gestion de cette zone de mémoire, en particulier la détermination du moment où il faut effacer tout ou partie des champs qu'elle contient, afin de pouvoir les réutiliser, ne fait pas l'objet de la présente invention, mais dépend plus particulièrement du type d'application auquel est destiné l'objet portatif. Cependant, il sera expliqué ultérieurement, de façon beaucoup plus précise, comment l'invention met à profit la présence de cette zone (13) de mémoire de type EEPROM.

La mémoire (MC) de la carte peut en outre contenir une quatrième zone (14) de mémoire volatile de type RAM, c'est-à-dire une zone de mémoire dont les données ou informations qu'elle contient sont perdues dès lors que l'alimentation électrique de la carte n'est plus assurée. Cette zone peut être utilisée pour mémoriser des informations ou données dont on sait par avance qu'elles ne seront pas nécessaire d'une session à l'autre. En outre, on utilise cette quatrième zone (14) de mémoire au moment de l'effacement de la troisième zone de type EEPROM, pour stocker temporairement certaines données de cette troisième zone qu'il faudra y réinscrire après qu'elle aura été effacée.

Ainsi, dans les applications bancaires, le solde d'un compte client qui serait inscrit en troisième zone EEPROM devrait être transféré dans cette quatrième zone (14) de mémoire (de type RAM), avant que la zone de type EEPROM ne soit effacée, et ensuite il serait à nouveau transféré de la quatrième zone (14) vers la troisième (13).

La présente invention tire également profit de la présence de cette quatrième zone (14) de mémoire lors du calcul des nombres aléatoires.

Enfin, la mémoire (MC) de l'objet portatif (1) peut comporter une cinquième zone (15) de mémoire de type EPROM, c'est-à-dire une zone non volatile lors de la coupure de l'alimentation électrique de l'objet portatif, mais qui peut néanmoins être effacée en totalité, par exemple en la soumettant à une exposition à un rayonnement ultraviolet.

Un appareil (2) pour l'échange de données ou d'informations avec une carte (1), ainsi que pour le traitement complet ou partiel de ces informations, possède une structure connue en soi. On peut se référer à de nombreux brevets au nom de la demanderesse dans ce domaine, et en particulier à la demande de brevet français N° 2 601 535, pour ne citer qu'elle. Un tel appareil (2), qui peut être un terminal de transaction, ou un élément d'une machine de personnalisation, comporte notamment des circuits de traitement (TA) de données, qui peuvent exécuter des programmes appropriés dont les instructions (PA) sont enregistrées dans une mémoire (MA) incorporée dans, ou bien associée au dit appareil. La mémoire (MA) de l'appareil peut posséder une taille beaucoup plus importante que celle (MC) de la carte (1), et peut être batie à partir d'éléments électroniques, et/ou à partir de mémoires périphériques, telles que des disquettes, ou autres supports connus dans le domaine. La mémoire (MA) de l'appareil peut contenir une zone non volatile, avec des données secrètes qui seront utilisées lors des différentes transactions, et dans les processus de vérification de la validité des cartes qui y sont connectées. De tels processus sont appelés processus d'authentification.

Les données secrètes et le programme (ou au moins une partie de celui-ci) de l'appareil peuvent être incorporés dans un module de sécurité intégré, plus communément désigné dans le domaine par l'abréviation MCS.

La figure 2 illustre une variante d'organisation de la mémoire de l'objet permettant d'obtenir un nombre aléatoire dans un tel système mettant en oeuvre la présente invention.

Un nombre aléatoire est obtenu en applicant un algorithme de calcul à au moins deux paramètres dont le premier (PA1) est constitué par une donnée d'un champ mémoire (RB) de la carte ou de l'objet portatif, dont le contenu est modifié à chaque demande de nombre aléatoire lors d'une session, et dont le second (PA2) est constitué par une donnée d'un autre champ de mémoire (RI) dont le contenu est modifié au moins une fois lors de chaque session. Par ailleurs, le second paramètre est choisi d'une façon telle qu'il n'est pas susceptible d'avoir deux fois la même valeur lors de la durée de vie de l'objet portatif ou de la carte à mémoire et microcircuits.

Dans un mode de mise en oeuvre préféré, le premier paramètre (PA1) est constitué par la valeur du dernier nombre aléatoire calculé lors de la session en cours. Afin de permettre l'utilisation, pour un calcul ultérieur, du dernier nombre aléatoire calculé lors de la session en cours, il est nécessaire de prévoir, dans la mémoire de l'objet portatif ou de la carte, un champ (RB) de mémoire dans lequel ce dernier nombre est mémorisé. Comme dans tout système informatique, chacune des zones de mémoire peut être fractionnée en plusieurs champs ou mots, qui sont repérables par leur adresse. Conformément à la présente invention, afin de permettre la mémorisation du dernier nombre aléatoire calculé lors d'une session, on prévoit dans la quatrième (14) zone de mémoire RAM, c'est-à-dire celle dont le contenu est détruit à chaque déconnexion de l'objet portatif, le champ (RB) pour mémoriser le dernier nombre aléatoire calculé lors de la session en cours. Lors d'un calcul d'un nombre aléatoire, ce champ (RB) est rempli avec ledit nombre aléatoire qui constitue le premier paramètre (PA1) lors d'un calcul ultérieur. Lors d'un calcul ultérieur, le nouveau nombre aléatoire calculé est substitué au nombre aléatoire qui avait été précédemment calculé et mémorisé. L'adresse ou la position en mémoire où doit être mémorisé le nombre aléatoire peut être figée une fois pour toutes, ou bien encore déterminée en cours de session par les circuits de traitement de l'objet portatif. Cet aspect n'est pas d'une importance capitale, le seul aspect important étant que le système de traitement soit en mesure de déterminer l'emplacement en mémoire (14) du dernier nombre aléatoire calculé.

A chaque remise sous tension des circuits de l'objet portatif ou de la carte, le premier paramètre est susceptible de retrouver une valeur identique, puisqu'il est mémorisé dans une zone de mémoire dont le contenu est effacé à chaque mise hors tension des circuits, zone qui est réinitialisée à chaque remise sous tension. Ceci n'a pas d'importance, puisque ce programme de calcul d'un nombre aléatoire tient compte non seulement de ce premier paramètre, mais encore d'un second paramètre dont la valeur n'est pas susceptible de se retrouver deux fois à l'identique lors de la durée de vie de la carte.

Ce mode de mise en oeuvre est particulièrement économe en mémoire, puisqu'il suffit de prévoir dans la zone (13) de mémoire volatile (RAM) seulement un champ mémoire contenant un nombre de bits correspondant au format du nombre aléatoire que l'on désire calculer, et puisqu'il suffit à chaque calcul de nombre aléatoire de remplacer la valeur que ce champ contenait à l'issue du calcul précédent ou à la remise sous tension des circuits par le nouveau nombre calculé.

Ainsi, à titre d'exemple, les différentes zones de mémoire d'une carte à mémoire et microcircuits électroniques, au format des cartes de crédit, comprennent des mots de 32 bits. Dans un mode de mise en oeuvre préféré de l'invention, on effectue le calcul des nombres aléatoires sur 64 bits, de sorte qu'il suffit de réserver deux mots de 32 bits dans la quatrième zone (14) de mémoire volatile (RAM) de la mémoire de la carte ou de l'objet portatif pour constituer le champ de mémoire (RB) pour la mémorisation des mots aléatoires successivement calculés lors d'une session.

La figure 2 illustre ce qui vient d'être décrit. On y a représenté plus en détail une mémoire d'objet portatif pour la mise en oeuvre de l'invention. Ainsi, on a représenté la quatrième zone (14) de mémoire volatile avec plusieurs champs. Dans le champ (RB) apparaît un trait interrompu pour signifier que le champ (RB) pourrait être constitué d'un ou de plusieurs mots, ce qui est le cas lorsque le nombre aléatoire est calculé sur 64 bits, alors que la mémoire contient des mots de 32 bits.

Sur la figure 2, on a également illustré quelles autres parties de la mémoire sont susceptibles d'être utilisées lors du calcul et de la génération d'un nombre aléatoire.

En particulier, dans la quatrième zone (14) de mémoire, c'est-à-dire la zone volatile, on a représenté un champ (ZT), constitué à partir de plusieurs mots mémoire (ZT1, ZT2), qui est utilisé pendant la phase de modification du second paramètre d'une session à l'autre, comme il sera expliqué ci-après.

La troisième zone (13) de mémoire comporte un champ (RI), pouvant également être constitué de plusieurs mots (PA21, PA22). C'est le contenu global de ce champ qui constitue le second paramètre (PA2) utilisé pour le calcul d'un nombre aléatoire.

Le programme de calcul d'un nombre aléatoire est, de préférence, inscrit dans une partie non volatile de la mémoire. Il peut être inscrit dans la première zone de mémoire (11), du type à lecture seulement (ROM), lors du masquage de celle-ci, ou bien encore il peut être inscrit après la mise en service de la carte ou de l'objet portatif, à l'intérieur de la seconde zone (12) de type PROM.

Ce programme de calcul met en oeuvre une fonction (F) plus ou moins complexe. Pour le calcul du nombre aléatoire, les circuits de traitement de l'objet portatif viennent lire et prélever le contenu (PA1) du champ (RB) de la quatrième zone de mémoire, ils viennent lire le second paramètre (PA2) contenu dans le champ (RI) de la troisième zone (13), et la fonction (F) de calcul du nombre aléatoire est appliquée, de sorte qu'un nombre aléatoire (RN) est fonction des deux paramètres :

RN = F (valeur de PA1, valeur de PA2).

Ensuite, après qu'un nombre aléatoire ait été calculé, le programme de fonctionnement de la carte ou de l'objet portatif est tel que les circuits de traitement (TC) de la carte ou de l'objet portatif viennent inscrire le résultat de ce calcul dans le champ (RB), afin qu'il puisse servir pour un calcul ultérieur éventuel de nombre aléatoire lors de la session en cours.

Bien entendu, lors du premier calcul d'un nombre aléatoire dans une session, le contenu du champ (RB) n'est pas fonction du résultat d'un calcul précédent, puisque le champ (RB) est situé dans une zone de mémoire volatile. Comme ceci a déjà été évoqué, ceci n'a aucune importance, puisque le contenu du champ (RB) ne constitue que l'un des paramètres pris en compte pour le calcul d'un nombre aléatoire, l'autre paramètre (PA2) étant constitué par le contenu d'un champ (RI) de la troisième zone (13) mémoire. Or, le contenu (PA2) de ce champ (RI) est modifié une fois lors de chaque session, de sorte que d'une session à l'autre, il ne retrouve pas la même valeur.

De préférence, le contenu du champ (RI) de la troisième zone (13), constituant le second paramètre (PA2) pris en compte lors d'un calcul de nombre aléatoire, est modifié au début de chaque session, avant qu'un nombre aléatoire ait été calculé. La modification du contenu (PA2) de ce champ (RI) suit, par exemple, immédiatement la réinitialisation des circuits de la carte de l'objet portatif, après la mise sous tension. Cette modification systèmatique, après la réinitialisation, ou tout au moins avant un premier calcul de nombre aléatoire, permet d'éviter des problèmes de fraude. En effet, si cette précaution n'était pas prise, un fraudeur pourrait très bien déconnecter sa carte avant que le contenu (PA2) du champ (RI) ait été changé en cours de session, de sorte qu'au début de la session suivante, le second paramètre aurait la même valeur. Or, puisqu'à priori, au début de chaque session le premier paramètre contenu dans le champ (RB) se retrouve à l'identique après la réinitialisation des circuits, il en résulterait que l'observation des calculs qui auraient eu lieu pendant la session précédente permettrait de prédéterminer les résultats de la session suivante. Cette précaution est donc particulièrement utile.

Dans un mode de mise en oeuvre, la modification du second paramètre (PA2), contenu dans le champ (RI) de la troisième zone (13) de mémoire, s'effectue en incrémentant la valeur de ce paramètre, à l'aide des circuits de traitement de la carte ou de l'objet portatif. Ce paramètre étant contenu dans une zone électriquement effaçable et reprogrammable, le programme de fonctionnement des circuits de traitement de l'objet portatif ou de la carte à mémoire et microcircuits est tel que seul le contenu (PA2) dudit champ (RI), ou d'une partie de celui-ci, peut être modifié d'une session à l'autre, sans qu'il soit besoin d'intervenir sur les autres champs de cette zone (13). Ceci ne pose pas d'inconvénient, car il est tout à fait possible, avec les mémoires de type EEPROM, de modifier seulement le contenu de champs déterminés de ces mémoires, sans modifier le reste desdites mémoires.

Dans un mode de mise en oeuvre préféré, la fonction utilisée pour calculer un nombre aléatoire met en oeuvre un algorithme de chiffrement tel que l'algorithme connu et couramment désigné par ses initiales (DES), venant de son appelation anglaise "Data Encryption System", ou une partie seulement des fonctions que comporte usuellement cet algorithme.

De préférence, par ailleurs, la génération d'un nombre aléatoire prend en compte au moins un troisième paramètre (PA3) qui permet de diversifier les résultats des calculs d'un objet portatif, ou d'une carte, à l'autre. En effet, en supposant qu'un fraudeur veuille tromper le système et possède deux cartes identiques, et étant donné que les programmes mis en oeuvre sont les mêmes, si le premier paramètre d'une première carte était identique au premier paramètre d'une seconde carte, et que simultanément le second paramètre de la première carte était identique au second paramètre de la seconde, alors les résultats du calcul de nombres aléatoires appliqués à ces deux cartes, seraient identiques. Un fraudeur pourrait mettre à profit cet aspect pour tenter de tromper le système, en transposant les observations effectuées à partir d'une première carte sur une seconde. C'est pourquoi, dans ce mode de mise en oeuvre préféré, le troisième paramètre (PA3) est par exemple un paramètre unique à chacune des cartes, et qui est inscrit après la fabrication dans une zone de mémoire non volatile pendant la durée de vie de la carte. Ce paramètre (PA3), que l'on a représenté sur la figure 2 dans un champ mémoire de la seconde zone (12) non volatile de la carte, pourrait également être implanté dans une zone de mémoire de type EEPROM, c'est-à-dire une zone correspondant à la troisième zone (13) sur les figures 1 ou 2, à condition que le programme de fonctionnement de la carte soit tel qu'au cas où ce troisième paramètre est implanté en zone de mémoire EEPROM, il ne puisse pas être effacé pendant toute la durée de vie de la carte.

Ainsi, on peut envisager d'utiliser en tant que troisième paramètre (PA3), le numéro de série de la carte, ou tout autre clé ou donnée spécifique à chacune des cartes, dans la mesure où elles existent. En effet, il a été dit auparavant que des nombres aléatoires pouvaient être requis à n'importe quelle phase de la durée de vie de la carte, c'est-à-dire soit pendant la phase de fabrication, soit pendant la phase de prépersonnalisation, soit pendant la phase de personnalisation, ou bien encore lorsque la carte a été remise à son utilisateur final.

Durant les phases de fabrication ou de prépersonnalisation, on rencontre des cartes où il n'existe pas encore de données distinctives entre les différentes cartes d'un même lot, de sorte qu'il n'est possible, ou il est difficile, d'obtenir des nombres aléatoires différents entre deux cartes du même lot. Ceci n'est pas très important, puisqu'à l'issue de ces phases, qui se déroulent sous contrôle direct du fabricant, c'est-à-dire avec des conditions de sécurité maximum, on aboutit très rapidement à un moment où les différentes cartes d'un même lot contiennent au moins une donnée distinctive de l'une à l'autre.

Pendant la fabrication des composants, est inscrite une clé fabricant, c'est-à-dire une donnée spécifique au fabricant d'un lot de cartes. Chaque nombre aléatoire requis pendant les phases de fabrication et de prépersonnalisation, après inscription de cette clé fabricant, sera obtenu en utilisant cette clé fabricant comme troisième paramètre (PA3). A l'issue de ces phases de fabrication et de prépersonnalisation et pendant les phases de personnalisation et d'utilisation, on utilisera soit une clé de personnalisation, soit le numéro de série, ou bien encore une combinaison de ces différentes clés ou données spécifiques pour constituer le troisième paramètre (PA3).

Sur la figure 2, la cinquième zone (15) de type EPROM ne contient aucun des paramètres servant au calcul des nombres aléatoires. Il est cependant possible que le troisième paramètre (PA3), ou tout ou partie des données de personnalisation, soit inscrit dans cette cinquième zone (15) du type EPROM au lieu d'être inscrit dans la seconde zone (12) de type PROM. Ce peut être le cas par exemple lorsqu'il est prévu que le prestataire de service puisse "rafraîchir" l'objet portatif au cours de sa durée de vie en modifiant les données de personnalisation qui y sont inscrites.

Enfin, dans une variante non représentée, le troisième paramètre (PA3), ou d'une façon plus générale, tout ou partie des données de personnalisation, sont inscrites dans la troisième zone (13) de type EEPROM.

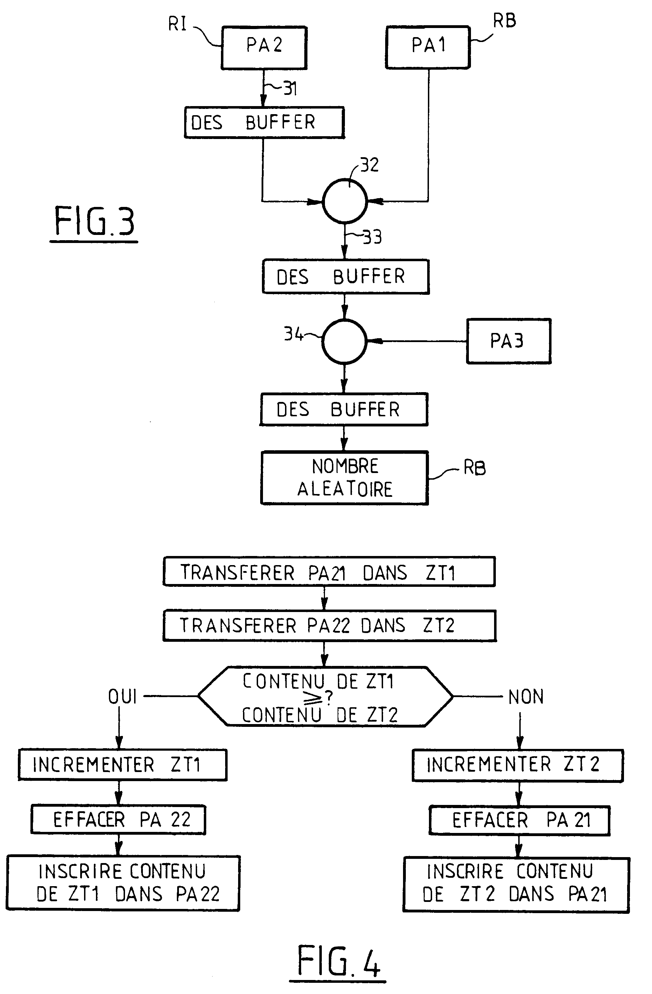

La figure 3 illustre un schéma de principe complet du calcul d'un nombre aléatoire, et la figure 4 illustre une procédure d'incrémentation du second paramètre (PA2), dans le cas où chacune des zones de mémoire est composée de mots de 32 bits et où on travaille, au moins pour le calcul du nombre aléatoire, sur 64 bits, c'est-à-dire sur deux mots, et dans le cas où ce second paramètre (PA2) est mémorisé dans une zone de mémoire de type EEPROM.

De préférence, la mise en oeuvre d'un algorithme tel que le (DES) s'effectue en mémorisant les données sur lesquelles doit porter le calcul dans une mémoire tampon spécifique au (DES). C'est ce que l'on a illustré sur la figure 3, où on fait apparaître cette mémoire tampon spécifique que l'on désigne par l'appellation (DES BUFFER). Dans une première phase (31), le contenu du champ (RI) contenant le second paramètre (PA2), dans la troisième zone (13) de type EEPROM, est chargé dans la mémoire tampon du DES (DES BUFFER). Ensuite, le contenu de cette mémoire ou registre tampon et le contenu du champ (RB), constituant le premier paramètre, sont combinés entre eux (phase 32), de façon à obtenir un mot de 64 bits, dans l'exemple considéré, qui est alors mémorisé dans le registre tampon de (DES) (phase 33). L'opération, effectuée entre le contenu du champ (RB) et le contenu du registre tampon (DES) pendant la phase (32), est une opération logique tel qu'un OU EXCLUSIF, un ET, etc, qui permet de combiner le contenu du registre tampon de (DES) et le contenu du champ (RB). Egalement, il peut s'agir d'une opération plus complexe, mais dont le résultat est un paramètre intermédiaire dont la taille est compatible avec la taille mémoire du registre tampon de DES (DES BUFFER).

Cette figure 3 illustre le cas où la génération d'un nombre aléatoire tient compte non seulement des deux premiers paramètres, mais également d'un troisième paramètre (PA3), tel qu'une clé spécifique comme cela a été évoqué auparavant. Ainsi, dans une phase (34), l'algorithme (DES), ou tout ou partie de celui-ci, ou tout autre algorithme permettant de réaliser un chiffrement, est appliqué au nouveau contenu du registre de (DES), issu du résultat de l'opération effectuée pendant la phase (32), et à la clé spécifique qui a été mentionnée, et qui est, pour sa part, prélevée dans la zone de mémoire où elle est mémorisée. Le résultat de l'opération effectuée pendant cette phase (34) est alors inscrit dans le registre de DES (DES BUFFER), avant d'être inscrit dans le champ (RB) de la quatrième zone de mémoire volatile de la carte ou de l'objet portatif. Ainsi, un nouveau nombre aléatoire est immédiatement mémorisé dans le champ approprié, en vue d'un éventuel calcul ultérieur.

Pour que la notion de nombre aléatoire soit totale, et tout risque de fraude soit exclu, dans un mode de mise en oeuvre préféré, on prévoit des précautions complémentaires qui s'appliquent dans toutes les variantes de répartition des différents paramètres dans les diverses zones.

En effet, tout ce qui a été décrit auparavant montre que l'invention permet d'éviter qu'une même combinaison de paramètres ne puisse se retrouver lors de la durée de vie de la carte, de sorte que la simple observation ou connaissance des paramètres ne permet pas de déduire immédiatement le nombre aléatoire qui sera obtenu.

Cependant, la connaissance de ces paramètres et de l'algorithme de calcul permettrait à un fraudeur compétent, disposant d'un matériel approprié, de calculer par avance le futur nombre aléatoire.

Ceci pourrait être le cas avec l'emploi d'un algorithme tel que le DES ou une partie de celui-ci, puisque cet algorithme est divulgué dans le public.

C'est pourquoi, dans un mode préféré de mise en oeuvre, au moins l'un des éléments pris en compte lors du calcul des nombres aléatoires est secret, bloquant ainsi la possibilité aux fraudeurs compétents de prévoir par avance les résultats des calculs ultérieurs.

De préférence, l'élément secret est l'un des paramètres utilisés lors du calcul. Etant donné que le premier paramètre (PA1) prélevé dans le champ (RB) de la quatrième zone de mémoire est le nombre aléatoire calculé précédemment, ce premier paramètre ne peut pas être secret puisqu'il est appelé à être transmis de la carte, vers l'appareil (2) auquel la carte est connectée. Il reste donc la possibilité de rendre secret le second paramètre (PA2) et/ou le troisième paramètre (PA3) lorsqu'il est tenu compte de ce dernier lors du calcul.

Il existe des procédés connus, que la demanderesse utilise par ailleurs dans nombre de ses produits, pour rendre secrètes des informations contenues dans des zones déterminées de mémoire. L'un des procédés les plus connus consiste à associer aux mots que l'on désire protéger en lecture vis-à-vis des circuits extérieurs, un bit de verrouillage qui est positionné dans un état déterminé indiquant aux circuits de traitement (TC) de l'objet portatif (1) si l'information considérée doit demeurer secrète ou non par rapport aux circuits extérieurs.

Ainsi, dans le cas particulier de la présente invention, on peut rendre le second paramètre (PA2), ou bien encore le troisième paramètre (PA3), accessible en lecture et en écriture seulement par les circuits de traitement (TC) de l'objet portatif, en associant à ces paramètres au moins un bit indiquant aux circuits de traitement que la valeur du paramètre ne doit pas être transmise à l'extérieur. De préférence, ce bit est positionné à une valeur appropriée à l'issue de la fabrication de l'objet portatif. Dans une variante, c'est le programme de gestion de l'objet portatif mémorisé en ROM ou en PROM qui gère l'accès aux zones mémoire.

Bien entendu, il faut également que les paramètres (PA2) et (PA3), de même que le paramètre (PA1), ne puissent pas être modifiés sur requête de l'extérieur. En effet, un fraudeur, s'il connaissait l'algorithme et parvenait à imposer la valeur qu'il désire aux paramètres, pourrait tromper le système. C'est pourquoi, l'ensemble des paramètres utilisés pour le calcul du nombre aléatoire est protégé en écriture, de l'extérieur, et leur contenu ne peut être modifié que sous contrôle des circuits de traitement (TC) de l'objet portatif. Cette protection peut également être assurée par des bits de verrouillage, ou par le programme de gestion de l'objet lui-même.

Comme il a été évoqué précédemment, le second paramètre (PA2) contenu dans le champ (RI) de la troisième zone (13) de mémoire est modifié par incrémentation lors de chaque session. Dans un mode de mise en oeuvre préféré de l'invention, on prévoit que, lors de la personnalisation des mémoires des objets portatifs, le second paramètre (PA2) ne soit pas initialisé à la même valeur dans chacun des objets portatifs. Cette précaution s'avère utile pour les applications dans lesquelles seulement un premier (PA1) et un second (PA2) paramètres sont pris en compte. Dans ce cas, si le second paramètre était identique, suite à la fabrication, dans chacune des cartes ou objets portatifs, alors un fraudeur qui se procurerait plusieurs cartes pourrait, à partir des observations effectuées sur une première carte, tromper le système en utilisant les autres cartes qu'il aurait à sa disposition.

Dans un mode de mise en oeuvre, cette initialisation à des valeurs différentes du second paramètre (PA2) est effectuée lors de la personnalisation de l'objet portatif (1). La valeur du second paramètre est calculée ou extraite des circuits de traitement (TA) de l'appareil de personnalisation, puis est inscrite à l'intérieur du champ (RI) de la troisième zone (13), alors que celui-ci n'est pas encore protégé en écriture vis-à-vis de l'extérieur. Durant cette phase de personnalisation, lorsque la valeur initiale du second paramètre (PA2) a été inscrite, alors le bit de protection en écriture vis-à-vis des circuits extérieurs est positionné de façon adéquate.

La détermination de la valeur initiale du second paramètre (PA2) qui doit être inscrite dans chacune des cartes peut être faite par un calcul effectué, soit dans les circuits de traitement (TC) de la carte, lorsqu'elle est connectée à la machine de personnalisation, ou bien dans les circuits de traitement (TA) de la machine de personnalisation. Lorsque le calcul est effectué par les circuits de traitement (TC) de l'objet portatif (1), il peut tenir compte de la valeur du numéro de série de l'objet, puisque celle-ci est différente d'un objet à l'autre, de sorte que la valeur initiale du second paramètre (PA2) a de fortes chances de différer d'un objet portatif à l'autre.

Lorsque le calcul est effectué par les circuits de traitement (TA) de l'appareil de personnalisation, la valeur du second paramètre à inscrire dans la mémoire de l'objet portatif peut être obtenue suite à un calcul prenant en compte un nombre aléatoire généré au niveau de l'appareil de personnalisation, ou bien encore peut être une valeur d'un registre de la mémoire (MA) de l'appareil de personnalisation, incrémentée à chaque introduction d'un nouvel objet portatif.

On peut envisager d'autres solutions pour initialiser le second paramètre à l'issue de la fabrication de l'objet portatif, l'essentiel étant qu'un fraudeur sache, au cas où il disposerait de plusieurs objets portatifs, que ceux-ci ne possèdent pas forcément les mêmes valeurs d'initialisation, et qu'en conséquence, il ne peut pas simuler par avance les résultats qu'il obtiendra avec chacun des objets qu'il possède.

Lorsqu'un troisième paramètre (PA3) est mis en oeuvre pour le calcul d'un nombre aléatoire, comme ceci a été envisagé précédemment, il faut que ce paramètre (PA3) soit secret, lorsque le paramètre (PA2) ne l'est pas, et que l'on veut offrir le degré de sécurité maximum. Bien entendu, lorsque le second paramètre (PA2) est secret, il n'est pas nécessaire que le troisième paramètre (PA3) le soit. Par contre, lorsque le troisième paramètre (PA3) est secret, alors le second paramètre (PA2) ne doit pas être nécessairement secret.

Comme ceci a été évoqué, le troisième paramètre (PA3) peut être le numéro de série de l'objet portatif, ou une clé spécifique inscrite lors de la personnalisation de l'objet portatif. Généralement, le numéro de série doit demeurer accessible en lecture pas n'importe quel circuit de traitement (TA) d'un appareil (2) extérieur de traitement des données contenues dans la mémoire de l'objet portatif. Dans ce cas, lorsque le troisième paramètre utilisé est le numéro de série, alors le second paramètre (PA2) doit être inaccessible en lecture par des circuits de traitement (TA) d'un appareil (2) extérieur. Par contre, toute autre donnée diversifiée, secrète, propre à un objet portatif déterminée, peut constituer le troisième paramètre (PA3), sans qu'il soit nécessaire d'en prévoir une spécifique pour le calcul des nombres aléatoires.

La figure 4 illustre une procédure d'incrémentation du second paramètre lorsque celui-ci est constitué de deux mots mémoire, par exemple deux mots de 32 bits, de sorte que le second paramètre comporte 64 bits. Plus précisément, la figure 4 présente un organigramme des opérations qui peuvent être mises en oeuvre pour effectuer cette incrémentation.

Cette figure 4 peut être comprise en se reportant également à la figure 2 dont les éléments qui n'ont pas été décrits auparavant sont décrits maintenant.

Comme il apparaît sur la figure 2, dans un tel cas, le champ (RI) de la troisième zone (13) contenant le second paramètre (PA2) est constitué de deux sous-champs (PA21 et PA22) constitués chacun par un mot de mémoire.

Par ailleurs, dans la mémoire volatile (14), on a prévu un champ tampon (ZT), comprenant également deux sous-champs (ZT1 et ZT2) qui sont utilisés pendant cette phase d'incrémentation, qui a lieu, on le rappelle, après chaque réinitialisation des circuits de la carte ou de l'objet portatif, après la remise sous tension, c'est-à-dire après la mise en communication entre l'objet portatif ou la carte (1) et l'appareil (2) de transaction approprié.

Une première phase consiste à charger le contenu du premier sous-champ (PA21) de la troisième zone (13), dans le premier sous-champ (ZT1) de la quatrième zone (14). Puis, le contenu du second sous-champ (PA22) de la troisième zone (13) est chargé dans le second sous-champ (ZT2) de la quatrième zone (14).

Il en résulte que, suite à ces opérations de chargement, le champ tampon (ZT) de la quatrième zone (14) a le même contenu (PA2) que le champ (RI) de la troisième zone (13), c'est-à-dire qu'il contient le second paramètre.

Suite à ces opérations de chargement, un test est effectué entre le contenu des sous-champs (ZT1 et ZT2) de la quatrième zone (14), afin de vérifier si la valeur du contenu du premier sous-champ (ZT1) est supérieure ou égale à la valeur du contenu du second (ZT2).

Dans l'affirmative, la valeur du premier sous-champ (ZT1) de la quatrième zone est incrémentée, et le second sous-champ (PA22) de la troisième zone (13), c'est-à-dire celui dont le contenu avait été chargé dans le second sous-champ (ZT2) de la quatrième zone (14), est effacé, et la nouvelle valeur du premier sous-champ (ZT1) de la quatrième zone (14) est inscrite dans le second sous-champ (PA22) de la troisième zone (13), de sorte que le nouveau second paramètre est constitué de la façon suivante : contenu du premier sous-champ (PA21) identique à celui de la session précédente, et contenu du second sous-champ (PA22) correspondant au contenu du premier (PA21) incrémenté par rapport à la session précédente.

Lorsque le test mentionné précédemment révèle que c'est en fait le contenu du second sous-champ (ZT2) qui est supérieur à celui du premier (ZT1), ce qui signifie qu'en fait le contenu du second sous-champ (PA22) est supérieur à celui du premier sous-champ (PA21), alors le contenu du second sous-champ (ZT2) de la quatrième zone (14) volatile est incrémenté, puis le contenu du premier sous-champ (PA21) de la troisième zone (13) est effacé et est remplacé par le contenu du second sous-champ (ZT2) obtenu après incrémentation.

Il est bien entendu que la procédure qui vient d'être décrite n'est pas limitative, et que l'on aurait pu choisir toute autre procédure. En particulier, si on avait voulu se contenter de nombres aléatoires dont la longueur correspond à la longueur des mots de la mémoire, il aurait suffi que le second paramètre (PA2) ne soit constitué que d'un seul mot, et la procédure d'incrémentation aurait été beaucoup plus simple, puisqu'elle se serait faite à la façon de ce qui se passe dans un compteur.

La procédure qui vient d'être décrite est donc tout particulièrement adaptée lorsque l'on veut que le nombre aléatoire ait une taille suffisante pour être suffisamment significatif.

On constate qu'avec la procédure qui vient d'être décrite, lorsque le second paramètre (PA2) est constitué de deux mots mémoire, l'évolution de ce paramètre (PA2), lors des incrémentations successives d'une session à l'autre, est telle que chacun des mots constituant ce paramètre est modifié une fois sur deux, et que la modification d'un mot consiste à remplacer ce mot par l'autre mot après qu'il ait été incrémenté.

Cependant, le fait que le second paramètre soit constitué de deux mots ayant chacun un nombre N de bits déterminés n'augmente pas de façon significative le nombre de combinaisons possibles pour pouvoir constituer ce second paramètre. Comme ceci a déjà été mentionné auparavant, cette constitution à l'aide de deux ou de plusieurs mots permet simplement d'adapter le format du paramètre (PA2) au format du nombre aléatoire souhaité.

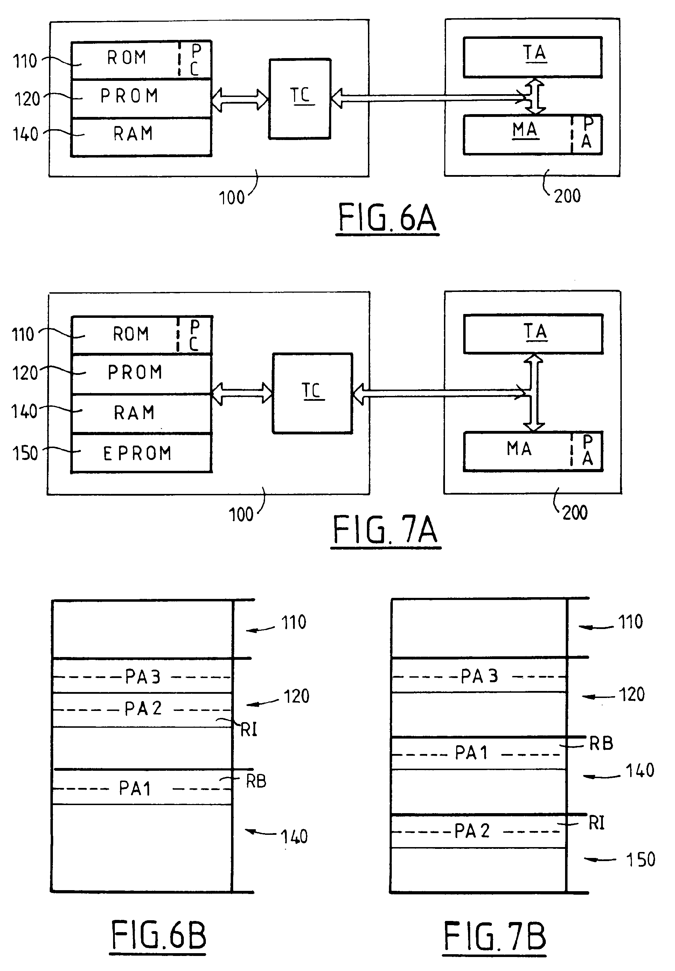

En effet, puisque chaque mot constitutif du second paramètre est modifié une fois sur deux, on constate que le nombre total NT de seconds paramètres (PA2) différents qu'il est possible d'obtenir se calcule de la façon suivante : $NT = 2^N + 1$. Si le paramètre (PA2) avait été constitué à l'aide d'un seul mot de N bits, alors le nombre total NT' aurait été : $NT' = 2^N$. Ceci est illustré par les figures 5A et 5B qui montrent comment évolue le second paramètre (PA2) lorsqu'il est composé d'un mot de trois bits (figure 5A), ou de deux mots de trois bits (figure 5B) incrémentés comme décrit en regard de la figure 4. Sur la figure 5A, on constate qu'il existe seulement huit possibilités pour le second paramètre (PA2), lorsque celui-ci est constitué seulement d'un seul mot de trois bits, alors que sur la figure 5B, on constate qu'il existe neuf possibilités.

Dans un mode de mise en oeuvre, le second paramètre (PA2) est constitué de deux mots de 32 bits, et on détermine alors qu'il peut prendre environ 4,3 milliards de valeurs différentes. Ceci est largement suffisant, puisqu'en supposant que la carte soit connectée en permanence à un terminal, et qu'un nombre aléatoire soit calculé chaque seconde, il faudrait une connection permanente de 136 années pour épuiser les possibilités, en supposant également que la valeur initiale du second paramètre (PA2) soit nulle (0 binaire) et que chaque incrémentation porte sur une unité. En effet, dans nombre d'applications pratiques, la durée de vie ou d'utilisation est restreinte volontairement à quelques années.

Lorsque la présente invention s'applique à un objet portatif ou à une carte possédant une zone de mémoire de type EEPROM, on parvient à générer des nombres aléatoires de façon particulièrement économique en mémoire, ainsi que ceci vient d'être illustré.

Cependant, toutes les applications ne mettent pas en oeuvre des cartes ou objets portatifs possédant une zone de mémoire de type EEPROM. L'invention est néanmoins applicable à des systèmes utilisant des cartes ou objets portatifs ne possédant pas une telle zone de mémoire de type EEPROM, ainsi qu'illustré par les figures 6A à 7B.

La figure 6A illustre une première variante d'un système qui ne comporte pas de mémoire de type EEPROM, et la figure 6B illustre plus particulièrement comment les paramètres (PA1, PA2, PA3) sont mémorisés dans la mémoire.

Un système tel qu'illustré sur la figure 6A comporte un objet portatif (100) tel qu'une carte avec une mémoire (MC) et des circuits de traitement (TC) des données de la mémoire. Le système comporte également au moins un appareil ou une machine (200) de transaction, identique ou similaire à celle illustrée sur la figure 1, donc comportant des circuits de traitement (TA) et une mémoire (MA) dont une partie est utilisée pour mémoriser un programme de fonctionnement (PA).

La mémoire (MC) de l'objet (100) portatif comporte une première zone (110) de mémoire de type ROM, dans laquelle le programme de fonctionnement (PC) de l'objet portatif peut être inscrit. Une telle mémoire comporterait également une seconde zone (120) de type PROM, c'est-à-dire une zone programmable et non volatile, et enfin une troisième zone (140) de type RAM.

La figure 6B illustre la façon dont les paramètres sont gérés et répartis dans les différentes zones de la mémoire (MC) de l'objet portatif.

Le premier paramètre (PA1) est mémorisé dans un champ (RB) de la zone (140) de type RAM. De préférence, comme c'était le cas avec la variante illustrée sur les figures 1 à 5 précédentes, le premier paramètre (PA1) est le dernier nombre aléatoire calculé lors de la session en cours. Egalement, ce premier paramètre (PA1) peut occuper plusieurs mots mémoire, ce qui est illustré par un trait interrompu traversant le champ (RB) sur la figure 6B.

Comme dans les variantes illustrées en regard des figures 1 à 5, le troisième paramètre (PA3), qui peut également occuper plusieurs mots mémoire, est mémorisé dans un champ de la zone de mémoire (120) de type PROM. Ce troisième paramètre peut être le numéro de série de l'objet portatif, ou bien encore une donnée diversifiée secrète, propre à cet objet.

La différence entre la variante illustrée par ces figures 6A et 6B et les variantes illustrées par les figures précédentes, réside dans le fait que, en raison de l'absence d'une zone de mémoire de type EEPROM, il faut mémoriser et gérer le second paramètre, modifié lors de chaque session, d'une façon différente. Dans ce cas, le second paramètre (PA2) est constitué par une donnée de la zone de mémoire (120) de type PROM, c'est-à-dire celle qui contient également le troisième paramètre. Ainsi qu'il a été indiqué en regard des figures 1 et 2, la zone de mémoire de type PROM est celle dont une partie au moins est utilisée comme mémoire de contrôle, c'est-à-dire celle qui sert à mémoriser les évènements survenant au cours de la durée de vie de l'objet portatif. En fait, la mémoire de contrôle est constituée d'un certain nombre de mots de la zone, et elle est modifiée sous contrôle des circuits de traitement (TC) de l'objet portatif. Comme il a été expliqué dans le préambule de la présente demande, un mot de la mémoire de contrôle peut être modifié autant de fois qu'il comporte de bits, dans la mesure où chaque modification porte sur un bit. En d'autres termes, si chaque mot de la mémoire de contrôle comporte huit bits, alors théoriquement, chaque mot est susceptible d'enregistrer huit opérations de contrôle différentes, avant que le mot suivant de la mémoire de contrôle commence à être modifié. En pratique ceci n'est pas tout à fait vrai, puisque certaines opérations de contrôle sont codées sur plusieurs bits, par exemple deux ou trois bits. Cependant, on comprend bien qu'il sera très rare qu'un mot de la mémoire de contrôle soit modifié en une seule fois. Ainsi, tant qu'il reste des bits disponibles dans un mot de la mémoire de contrôle, c'est-à-dire des bits qui n'ont pas été modifiés par rapport à leur état d'origine, entre le dernier bit modifié et la fin du mot dans lequel ce dernier bit modifié se trouve, alors il est possible de réutiliser ce mot. Cependant, comme il a été expliqué également dans le préambule de la présente demande, un mot de la mémoire de contrôle peut prendre la même configuration binaire qu'un autre mot antérieurement modifié dans cette mémoire, et c'est pourquoi, dans un mode de mise en oeuvre préféré, le second paramètre (PA2) est constitué par le dernier mot modifié de la mémoire de contrôle, et par l'adresse en mémoire de ce mot.

Ainsi, en prenant en compte non seulement la valeur du dernier mot modifié dans la mémoire de contrôle, c'est-à-dire un mot dont on sait qu'il a été modifié par rapport à la session précédente, mais encore la valeur de l'adresse de ce mot, on est certain que le second paramètre (PA2) ne peut pas avoir deux fois la même valeur lors de la durée de vie de la carte.

Cette solution est économe en mémoire, puisqu'elle évite à avoir à prévoir une zone de mémoire spécifique pour constituer le second paramètre (PA2), en mettant à profit l'existence d'une partie de mémoire dont les données sont susceptibles de changer d'une session à l'autre.

Dans une variante, qui serait utilisable dans les cas où la mémoire (MC) de l'objet portatif (100) ne comporte pas de mémoire de contrôle, ou bien encore dans les cas où la mémoire de contrôle est susceptible de ne pas être modifiée à chaque session, alors on réserve une partie de la zone (120) de type PROM pour constituer le second paramètre. Plus précisément, un certain nombre de mots de cette zone sont réservés et modifiables, par exemple, bit à bit. La modification de cette zone, afin de faire évoluer le second paramètre au fur et à mesure des sessions peut s'effectuer de la façon suivante : chaque mot de la partie de la zone (120) de mémoire de type PROM affectée au second paramètre (PA2) est modifiable bit à bit, de sorte que, au début d'une session, après la réinitialisation des circuits de traitement de l'objet portatif, un bit d'un mot est modifié, et lors de la session suivante, le bit suivant du même mot est modifié. Lorsque tous les bits d'un même mot ont été modifiés, alors la modification suivante affecte le premier bit du mot suivant de cette partie de zone. De cette façon, à chaque demande de nombre aléatoire lors d'une session, le second paramètre est constitué au moins par le dernier mot modifié dans cette partie de zone et par l'adresse en mémoire de ce dernier mot modifié. Ainsi, on évite que, lorsque le mot pris en compte change, le second paramètre reprenne une valeur qu'il aurait déjà eue, puisqu'on tient compte également de l'adresse.

Cette solution est un peu plus consommatrice de mémoire, puisqu'une partie de zone est spécifiquement réservée pour le second paramètre, mais la consommation supplémentaire est toute relative. En effet, en supposant un objet portatif dont la mémoire serait constituée de mots de 32 bits, dont la durée de vie serait volontairement limitée par le prestataire de service à deux ans, et qui serait utilisée lors de deux sessions par jour, il faudrait réserver 46 mots dans la zone (120) de mémoire de type PROM, ce qui correspond à 184 octets de mémoire. Ceci est relativement faible par rapport à la taille usuelle de mémoire des objets portatifs de ce type.

Généralement, la mémoire de contrôle doit être accessible en lecture de l'extérieur et, dans le cas où le second paramètre est constitué par le dernier mot modifié dans la mémoire de contrôle, il ne peut pas être secret. Dans ce cas, c'est le troisième paramètre (PA3) qui doit l'être, et on choisit, pour ce troisième paramètre (PA3), une donnée propre à l'objet portatif considéré.

Par contre, lorsque le second paramètre est constitué par le dernier mot modifié d'une partie spécifique de la zone (120) de mémoire de type PROM, il est possible de le rendre secret, et dans ce cas, le troisième paramètre (PA3) n'est pas nécessairement secret et peut être constitué simplement par le numéro de série, ou par toute autre donnée propre à l'objet portatif considéré.

La figure 7A illustre une autre variante de l'invention dans laquelle la mémoire (MC) de l'objet portatif (100) ne comporte pas de zone de mémoire de type EEPROM. Cette variante diffère de celle de la figure 6A en ce qu'elle comporte, en plus des zones décrites en regard des figures 6A et 6B, une zone (150) de mémoire de type EPROM, c'est-à-dire une zone non volatile, néanmoins effaçable, par exemple par exposition aux ultraviolets. Contrairement aux zones de type EEPROM, il n'est pas possible de sélectionner les parties de zone qui sont susceptibles d'être effacées, de sorte qu'un effacement affecte l'ensemble de la zone.

La variante illustrée sur la figure 7A permet que le second et le troisième paramètres soient mémorisés et prélevés dans la zone (120) de type PROM, comme c'était le cas dans les variantes illustrées par les figures 6A et 6B, le premier paramètre étant quant à lui toujours mémorisé dans la zone (140) de mémoire de type (RAM). Par ailleurs, le second paramètre peut être constitué par le dernier mot modifié de la zone de contrôle, lorsqu'elle est présente, et par l'adresse de ce dernier mot modifié, ou par un dernier mot modifié, et son adresse dans une partie spécifique de cette zone (120) de type PROM. Le troisième paramètre (PA3) peut être constitué par le numéro de série de l'objet portatif, ou par toute autre donnée propre à l'objet portatif considéré, secrètes ou non, selon que le second paramètre (PA2) n'est pas ou est secret.

Par contre, il est tout à fait possible que la présence de la zone (150) de type EPROM soit mise à profit pour mémoriser le second et/ou le troisième paramètre, avec les mêmes critères que ceux définis en regard des figures 6A et 6B. C'est ce qui est illustré par la figure 7B, sur laquelle le champ (RI) contenant le second paramètre a été représenté dans la zone (150) de mémoire de type EPROM.

Ce champ contenant le second paramètre (PA2) peut être la mémoire de contrôle, ou bien un champ spécifique comme décrit précédemment en regard des figures 6A, 6B et 7A.

Le calcul d'un nombre aléatoire dans un système qui ne comporterait pas de zone de mémoire de type EEPROM serait néanmoins identique à celui qui a été illustré par la figure 3 et décrit dans la partie de description correspondante.

## Revendications

1. Procédé de génération d'un nombre aléatoire dans un système à objets portatifs, tels que des cartes à mémoires électroniques et à microcircuits, du genre consistant à faire générer par les circuits de traitement (TC) d'un objet portatif (1, 100) chaque nombre aléatoire requis lors du traitement de données, lorsque l'objet portatif est connecté à un appareil (2, 200) de traitement, ledit procédé consistant à exécuter un programme de calcul enregistré dans les circuits de l'objet et prenant en compte, à chaque demande de nombre aléatoire lors d'une session, au moins un premier paramètre (PA1) constitué par la donnée d'un champ (RB) d'une zone mémoire (14) de l'objet, ladite donnée étant modifiée suite à chaque demande de nombre aléatoire lors d'une session , et un second paramètre (PA2) variable, caractérisé en ce que ladite zone mémoire (14) est volatile et le second paramètre est constitué par une donnée d'une autre zone mémoire (120, 13, 150) de l'objet, cette donnée étant modifiée au moins une fois lors de chaque session, et étant conservée entre la fin d'une session et la session suivante, cette autre zone (13) étant par ailleurs telle que le second paramètre (PA2) n'est pas susceptible d'avoir deux fois la même valeur au cours de la durée de vie de l'objet.

2. Procédé de génération d'un nombre aléatoire selon la revendication 1, caractérisé en ce qu'il consiste à prévoir, dans la zone de mémoire volatile (14), un champ spécifique (RB) pour mémoriser chaque nombre aléatoire successivement calculé lors d'une session, le nouveau nombre venant se substituer à l'ancien dans ledit champ, et en ce que le premier paramètre (PA1) est constitué par la donnée contenue dans ce champ spécifique (RB).

3. Procédé de génération d'un nombre aléatoire selon la revendication 1, caractérisé en ce que le second paramètre (PA2) est gardé inaccessible en lecture et en écriture aux circuits de traitement (TA) d'un appareil de traitement (2, 200) des données contenues dans l'objet portatif (1, 100).

4. Procédé de génération d'un nombre aléatoire selon la revendication 3, caractérisé en ce que chaque objet portatif destiné à une même application est initialisé de façon que le second paramètre qu'il contient ne soit pas le même dans l'ensemble desdits objets portatifs .

5. Procédé de génération d'un nombre aléatoire selon la revendication 1, caractérisé en ce qu'il consiste à faire prendre en compte, en plus des deux paramètres précités (PA1, PA2) au moins un troisième paramètre (PA3), constitué par une donnée propre à l'objet portatif considéré.

6. Procédé de génération d'un nombre aléatoire selon la revendication 5, caractérisé en ce que le troisième paramètre (PA3) est gardé inaccessible en lecture et en écriture aux circuits de traitement (TA) d'un appareil de traitement (2, 200) des données contenues dans l'objet portatif (1, 100).

7. Procédé de génération d'un nombre aléatoire selon la revendication 1, caractérisé en ce que le second paramètre (PA2) est modifié en début de chaque session, après la réinitialisation des circuits de l'objet portatif (1, 100), faisant suite à sa connexion à l'appareil (2) de traitement approprié.

8. Procédé de génération d'un nombre aléatoire selon l'une quelconque des revendications 1 à 7 précédentes, caractérisé en ce que chaque zone mémoire de l'objet portatif étant divisée en mots, le second paramètre (PA2) est constitué par au moins un mot d'une zone mémoire (120, 13, 150) non volatile entre deux sessions et en ce que la modification de ce second paramètre consiste à incrémenter la valeur d'au moins un de ses mots (PA21, PA22) constitutifs.

9. Procédé de génération d'un nombre aléatoire selon la revendication 8, caractérisé en ce que le second paramètre (PA2) est constitué par le dernier mot modifié et son adresse en mémoire, dans une partie d'une zone (120, 150) de type PROM ou EPROM, dont le contenu de l'un des mots est modifié au moins une fois lors de chaque session.

10. Procédé de génération d'un nombre aléatoire selon la revendication 9, caractérisé en ce que ladite partie de zone (120, 150) est la mémoire de contrôle de l'objet portatif, et en ce que le second paramètre (PA2) est constitué par le dernier mot modifié de cette mémoire de contrôle, lors de la session en cours, et par l'adresse en mémoire de ce mot.

11. Procédé de génération d'un nombre aléatoire selon la revendication 9, caractérisé en ce que ladite partie de zone (120, 150) est une partie spécifique, dont le contenu est modifié sur requête des circuits de traitement (TC) de l'objet portatif, après la réinitialisation des circuits électroniques de cet objet, et en ce que chaque modification de cette partie affecte un bit différent de l'un des mots de cette partie.

12. Procédé de génération d'un nombre aléatoire selon la revendication 8, caractérisé en ce que le second paramètre est constitué par deux mots (PA21, PA22) d'un champ (RI) de l'autre zone (13), en ce que cette zone est du type effaçable et reprogrammable électriquement (EEPROM) et en ce que pour incrémenter ce second paramètre (PA2), on mémorise ses deux mots binaires (PA21, PA22) dans un champ (ZT) de mémoire tampon de la zone (14) de mémoire volatile, en ce qu'on détecte dans cette mémoire tampon lequel des deux mots (ZT1, ZT2) a une valeur supérieure à l'autre, en ce que l'on incrémente le mot ayant une valeur supérieure, et en ce que l'on substitue, dans la zone de mémoire (13) EEPROM, le mot ainsi incrémenté au mot qui avait la plus faible valeur (PA21 ou PA22).

13. Objet portatif électronique, tel qu'une carte à mémoire (MC) et microcircuits de traitement (TC), pour la mise en oeuvre du procédé selon l'une des revendications 1 à 12, agencé pour exécuter un programme de calcul du nombre aléatoire, mémorisé dans une zone mémoire non volatile (11,12) en prenant en compte, à chaque demande de nombre aléatoire lors d'une session, au moins un premier paramètre (PA1) constitué par la donnée d'un champ (RB) d'une zone mémoire (14) de l'objet, ladite donnée étant modifiée suite à chaque demande de nombre aléatoire lors d'une session, et un second paramètre (PA2) variable, caractérisé en ce que ladite zone mémoire est volatile et le second paramètre est constitué par une donnée d'une autre zone mémoire (120, 13, 150) de l'objet, cette donnée étant modifiée au moins une fois lors de chaque session et étant conservée entre la fin d'une session et la session suivante, cette autre zone (13) étant par ailleurs telle que le second paramètre (PA2) n'est pas susceptible d'avoir deux fois la même valeur au cours de la durée de vie de l'objet.

14. Objet portatif électronique selon la revendication 13, caractérisé en ce que l'autre zone destinée à mémoriser le second paramètre (PA2) est une zone de mémoire de type PROM (120) ou EPROM (150).

15. Objet portatif selon la revendication 13, caractérisé en ce que l'autre zone (13) pour mémoriser le second paramètre (PA2) est de type EEPROM, et en ce que la zone de mémoire volatile (14) servant à la mémorisation du premier paramètre (PA1) comporte en outre un champ (ZT) réservé pour mémoriser temporairement le second paramètre (PA2) lors de sa modification.

16. Objet portatif selon la revendication 13, caractérisé en ce qu'il comporte, mémorisée dans une zone de mémoire non volatile (12, 13) au moins une donnée spécifique à l'objet portatif considéré, constituant un troisième paramètre (PA3) pris en compte lors de la génération du nombre aléatoire.

17. Objet portatif selon la revendication 16, caractérisé en ce que le troisième paramètre (PA3) est constitué par le numéro de série de l'objet portatif.

18. Objet portatif selon la revendication 16, caractérisé en ce que le troisième paramètre (PA3) est constitué par une donnée secrète diversifiée, propre à l'objet portatif.

19. Objet portatif selon la revendication 13, caractérisé en ce que le premier paramètre (PA1) mémorisé dans le champ (RB) de la zone (14) volatile de la mémoire, suite à chaque calcul de nombre aléatoire, est le nombre aléatoire lui-même.

20. Système de traitement de données pour la mise en oeuvre du procédé selon l'une des revendications 1 à 12, caractérisé en ce qu'il comporte un objet portatif (1) selon l'une des revendications 13 à 19, et un appareil (2) de traitement auquel l'objet portatif est connectable.

**Patentansprüche**

1. Verfahren zur Erzeugung einer Zufallszahl in einem System mit tragbaren Gegenständen wie elektronische Speicherkarten und Chipkarten, bei dem durch die Verarbeitungsschaltungen (TC) eines tragbaren Gegenstandes (1, 100) jede während der Datenverarbeitung erforderliche Zufallszahl erzeugt wird, wenn der tragbare Gegenstand mit einer Verarbeitungseinrichtung (2, 200) verbunden wird, wobei das Verfahren darauf beruht, daß ein in den Schaltungen des Gegenstandes gespeichertes Rechenprogramm ausgeführt wird, mit dem bei jeder Zufallszahl-Anforderung während einer Sitzung wenigstens ein erster Parameter (PA1), der durch die Datengröße eines Feldes (RB) eines Speicherbereiches (14) des Gegenstandes gebildet ist, wobei die Datengröße im Anschluß an jede Zufallszahl-Anforderung während einer Sitzung abgeändert wird, und ein zweiter variabler Parameter (PA2) berücksichtigt wird, dadurch gekennzeichnet, daß der Speicherbereich (14) flüchtig ist und der zweite Parameter durch eine Datengröße eines anderen Speicherbereichs (120, 13, 150) des Gegenstandes gebildet ist, wobei diese Datengröße wenigstens einmal während jeder Sitzung abgeändert und zwischen dem Ende einer Sitzung und der folgenden Sitzung beibehalten wird, und wobei dieser andere Bereich (13) überdies so ist, daß der zweite Parameter (PA2) während der Lebensdauer des Ge-genstandes nicht zweimal den gleichen Wert annehmen kann.

15

2. Verfahren zur Erzeugung einer Zufallszahl nach Anspruch 1, dadurch gekennzeichnet, daß es darauf beruht, daß in dem flüchtigen Speicherbereich (14) ein spezifisches Feld (RB) zum aufeinanderfolgenden Speichern jeder während einer Sitzung berechneten Zufallszahl vorgesehen wird, wobei die neue Zahl die vorhergehende ersetzt, und daß der erste Parameter (PA1) durch die in diesem spezifischen Feld (RB) enthaltene Datengröße gebildet wird.

3. Verfahren zur Erzeugung einer Zufallszahl nach Anspruch 1, dadurch gekennzeichnet, daß der Zugriff auf den zweiten Parameter (PA2) beim Lesen und Schreiben seitens der Verarbeitungsschaltungen (TA) einer Einrichtung (2, 200) zur Verarbeitung von in dem tragbaren Gegenstand (1, 100) enthaltenen Daten verhindert wird.

4. Verfahren zur Erzeugung einer Zufallszahl nach Anspruch 3, dadurch gekennzeichnet, daß die für eine gleiche Anwendung bestimmten tragbaren Gegenstände jeweils so initialisiert werden, daß der zweite Parameter, den sie jeweils enthalten, in der Gesamtheit der tragbaren Gegenstände jeweils unterschiedlich ist.

5. Verfahren zur Erzeugung einer Zufallszahl nach Anspruch 1, dadurch gekennzeichnet, daß zusätzlich zu den beiden zuvorgenannten Parametern (PA1, PA2) wenigstens ein dritter Parameter (PA3) berücksichtigt wird, der durch eine Datengröße gebildet ist, die für den betrachteten tragbaren Gegenstand charakteristisch ist.

6. Verfahren zur Erzeugung einer Zufallszahl nach Anspruch 5, dadurch gekennzeichnet, daß der Zugriff auf den dritten Parameter (PA3) beim Lesen und Schreiben seitens der Verarbeitungsschaltungen (TA) einer Einrichtung (2, 200) zur Verarbeitung der in dem tragbaren Gegenstand (1, 100) enthaltenen Daten verhindert wird.

7. Verfahren zur Erzeugung einer Zufallszahl nach Anspruch 1, dadurch gekennzeichnet, daß der zweite Parameter (PA2) am Anfang einer jeden Sitzung nach der Neuinitialisierung der Schaltungen des tragbaren Gegenstandes (1, 100), die im Anschluß an dessen Verbindung mit der entsprechenden Verarbeitungseinrichtung (2) erfolgt, abgeändert wird.

8. Verfahren zur Erzeugung einer Zufallszahl nach irgendeinem der vorhergehenden Ansprüche 1 bis 7, dadurch gekennzeichnet, daß bei einer Unterteilung jedes Speicherbereiches des tragbaren Gegenstandes in Worte der zweite Parameter (PA2) durch wenigstens ein Wort eines nichtflüchtigen Speicherbereiches (120, 13, 150) zwischen zwei Sitzungen gebildet wird und daß das Abändern dieses zweiten Parameters darauf beruht, daß der Wert wenigsten eines seiner grundlegenden Worte (PA21, PA22) schrittweise vergrößert wird.

9. Verfahren zur Erzeugung einer Zufallszahl nach Anspruch 8, dadurch gekennzeichnet, daß der zweite Parameter (PA2) durch das letzte abgeänderte Wort und seine Speicheradresse in einem Teil eines Bereiches (120, 150) vom PROM- oder EPROM-Typ gebildet wird, von dem der Inhalt eines der Worte wenigstens einmal während jeder Sitzung abgeändert wird.

10. Verfahren zur Erzeugung einer Zufallszahl nach Anspruch 9, dadurch gekennzeichnet, daß der Bereichsteil (120, 150) der Steuerspeicher des tragbaren Gegenstandes ist und daß der zweite Parameter (PA2) durch das letzte, während der stattfindenden Sitzung abgeänderte Wort dieses Steuerspeichers und durch die Speicheradresse dieses Wortes gebildet wird.

11. Verfahren zur Erzeugung einer Zufallszahl nach Anspruch 9, dadurch gekennzeichnet, daß der Bereichsteil (120, 150) ein spezifischer Teil ist, dessen Inhalt auf eine Anforderung der Verarbeitungsschaltungen (TC) des tragbaren Gegenstandes hin nach der Neuinitialisierung der elektronischen Schaltungen dieses Gegenstandes abgeändert wird, und daß jede Änderung dieses Teils ein unterschiedliches Bit eines der Worte dieses Teils betrifft.

12. Verfahren zur Erzeugung einer Zufallszahl nach Anspruch 8, dadurch gekennzeichnet, daß der zweite Parameter durch zwei Worte (PA21, PA22) eines Feldes (RI) des anderen Bereiches (13) gebildet wird, daß dieser Bereich vom elektronisch löschbaren und umprogrammierbaren Typ (EEPROM) ist und daß man zum schrittweisen Vergrößern des zweiten Parameters (PA2) seine beiden binären Worte (PA21, PA22) in einem Pufferspeicherfeld (ZT) des flüchtigen Speicherbereiches (14) speichert, daß man in diesem Pufferspeicherbereich jenes der beiden Worte (ZT1, ZT2) ermittelt, das einen größeren Wert als das andere besitzt, daß man das einen größeren Wert besitzende Wort schrittweise vergrößert und daß man in dem EEPROM-Speicherbereich (13) das so vergrößerte Wort an die Stelle des Wortes (PA21, PA22) setzt, das den kleineren Wert besaß.

13. Tragbarer elektronischer Gegenstand wie eine Speicher (MC)- und eine Chip-Karte mit Microverabeitungsschaltungen (TC) zur Durchführung des Verfahrens nach einem der Ansprüche 1 bis 12, der zur Ausführung eines in einem nichtflüchtigem Speicherbereich (11, 12) gespeicherten Programms zur Berechnung der Zufallszahl ausgelegt ist, ine
dem bei jeder
Zufallszahl-Anforderung während einer Sitzung wenigstens ein erster, durch die Datengröße eines Feldes (RB) eines Speicherbereiches (14) des Gegenstandes gebildeter Parameter (PA1), der im Anschluß an jede Zufallszahl-Anforderung während einer Sitzung abgeändert wird, und ein zweiter variabler Parameter (PA2) berücksichtigt wird, dadurch gekennzeichnet, daß die Speicherzone flüchtig ist und daß der zweite Parameter durch eine Datengröße eines anderen Speicherbereiches (120, 13, 150) des Gegenstandes gebildet ist, wobei diese Datengröße wenigstens einmal während jeder Sitzung abgeändert und zwischen dem Ende einer Sitzung und der folgenden Sitzung beibehalten wird, wobei dieser andere Bereich (13) überdies so ist, daß der zweite Parameter (PA2) während der Lebensdauer des Gegenstandes nicht zweimal den gleichen Wert annehmen kann.

14. Elektronischer tragbarer Gegenstand nach Anspruch 13, dadurch gekennzeichnet, daß der andere zum Speichern des zweiten Parameters (PA2) bestimmte Bereich ein Speicherbereich vom PROM (120)- oder EPROM (150)-Typ ist.

15. Tragbarer Gegenstand nach Anspruch 13, dadurch gekennzeichnet, daß der andere Bereich (13) zum Speichern des zweiten Parameters ( PA2) vom EEPROM-Typ ist und daß der zum Speichern des ersten Parameters (PA1) dienende flüchtige Speicherbereich (14) überdies ein Feld (ZT) aufweist, das zum vorübergehenden Speichern des zweiten Parameters (PA2) während seiner Abänderung reserviert ist.

16. Tragbarer Gegenstand nach Anspruch 13, dadurch gekennzeichnet, daß er wenigstens eine in einem nichtflüchtigen Speicherbereich (12, 13) abgespeicherte, für den betrachteten tragbaren Gegenstand spezifische Datengröße enthält, die einen dritten Parameter (PA3) bildet, der bei der Erzeugung der Zufallszahl berücksichtigt wird.

17. Tragbarer Gegenstand nach Anspruch 16, dadurch gekennzeichnet, daß der dritte Parameter (PA3) durch die Seriennummer des tragbaren Gegenstandes gebildet ist.

18. Tragbarer Gegenstand nach Anspruch 16, dadurch gekennzeichnet, daß der dritte Parameter (PA3) durch eine variierte geheime Datengröße gebildet ist, die für den tragbaren Gegenstand charakteristisch ist.

19. Tragbarer Gegenstand nach Anspruch 13, dadurch gekennzeichnet, daß der erste Parameter (PA1), der im Anschluß an jede Berechnung der zufallszahl in dem Feld (RB) des flüchtigen Bereiches (4) des Speichers gespeichert wird, die Zufallszahl selbst ist.

20. Datenverarbeitungssystem zur Durchführung des Verfahrens nach einem der Ansprüche 1 bis 12 , dadurch gekennzeichnet, daß es einen tragbaren Gegenstand (1) gemäß einem der Ansprüche 13 bis 19 sowie eine verarbeitungseinrichtung (2) enthält, mit der der tragbare Gegenstand verbindbar ist.

## Claims

1. A method for generating a random number in a system with portable objects, such as cards with electronic memories and microcircuits, of the type comprising causing the processing circuits (TC) of a portable object (1, 100) to generate each random number required at the time of the data processing, when the portable object is connected to a processing apparatus (2, 200), said method consisting in executing a calculation program recorded in the circuits of the object and taking into account, for each demand for a random number at the time of a session, at least one first parameter (PA1) constituted by the datum of a field (RB) of a memory zone (14) of the object, said datum being modified following each demand for a random number during one session, and a second variable parameter (PA2) characterized in that said memory zone (14) is volatile and the second parameter is constituted by a datum of another memory zone (120, 13, 150) of the object, said datum being modified at least once during each session and being preserved between the end of one session and the next session, this other zone (13) moreover being such that the second parameter (PA2) is incapable of having the same value twice in the course of the duration of the life of the card.

2. A method for generating a random number according to claim 1, characterized in that it consists in providing, in the volatile memory zone (14), a specific field (RB) for memorizing each random number calculated successively at the time of a session, the new number being substituted for the old in this field, and that the first parameter (PA1) is constituted by the datum contained in this specific field (RB).

3. A method for generating a random number according to claim 1, characterized in that the second parameter (PA2) is kept inaccessible for reading and writing to the processing circuits (TA) of an apparatus (2, 200) for processing the data contained in the portable object (1, 100).

4. A method for generating a random number according to daim 3, characterized in that each portable object intended for the same application is initialized such that the second parameter that it contains is not the same in the set of said portable objects.

5. A method for generating a random number according to claim 1, characterized in that it consists in causing at least one third parameter (PA3), constituted by a datum specific to the portable object in question, to be taken into account, in addition to the two aforementioned parameters (PA1, PA2).

6. A method for generating a random number according to claim 5, characterized in that the third parameter (PA3) is kept inaccessible for reading and writing to the processing circuits (TA) of an apparatus (2, 200) for processing the data contained in the portable object (1, 100).

7. A method for generating a random number according to claim 1, characterized in that the second parameter (PA2) is modified at the beginning of each session, after the reinitialization of the circuits of the portable object (1, 100), following its connection to the appropriate processing apparatus (2).

8. A method for generating a random number according to any one of the preceding claims 1 to 7, characterized in that each memory zone of the portable object being divided into words, the second parameter (PA2) is constituted by at least one word of a memory zone (120, 13, 150) that is nonvolatile between two sessions, and that the modification of this second parameter consists in incrementing the value of at least one of its constituent words (PA21, PA22).

9. A method for generating a random number according to claim 8, characterized in that the second parameter (PA2) is constituted by the latest word modified and its address in memory, in a portion of a PROM- or EPROM-type zone (120, 150), the contents of one of the words of which are modified at least once during each session.

10. A method for generating a random number according to claim 9, characterized in that said portion of the zone (120, 150) is the control memory of the portable object, and that the second parameter (PA2) is constituted by the latest word modified of this control memory during the current session, and by the address in memory of this word.

11. A method for generating a random number according to claim 9, characterized in that said portion of the zone (120, 150) is a specific portion, the contents of which are modified upon request of the processing circuits (TC) of the portable object, after the reinitialization of the electronic circuits of this object, and that each modification of this portion affects a different bit of one of the words of this portion.

12. A method for generating a random number according to claim 8, characterized in that the second parameter is constituted by two words (PA21, PA22) of a field (RI) of the other zone (13); that this zone is of the electrically erasable and reprogrammable type (EEPROM); and that to increment this second parameter (PA2), its two binary words (PA21, PA22) are memorized in a buffer memory field (ZT) of the volatile memory zone (14); that in this buffer memory, the one of the two words (ZT1, ZT2) having a value higher than the other is detected; that the word having a higher value is incremented; and that in the EEPROM memory zone (13), the word thus incremented is substituted for the word that had the lowest value (PA21) or (PA22).

13. A portable electronic object, such as a card with memory (MC) and processing microcircuits (TC), for implementing the method according to one of claims (1-12), arranged to execute a program for calculating a random number, memorised in a nonvolatile memory zone (11, 12) by taking into account, for each demand for a random number, at least one first parameter (PA1) constituted by the datum of one field (RB) of a memory zone (14) of the object, said datum being modified following each demand for a random number at the time of a session, and a second variable parameter (PA2), characterized in that said memory zone is volatile and the second parameter is constituted by a datum of another memory zone (120, 13, 150) of the object, this datum being modified at least once at the time of each session and being conserved between the end of one session and the following session, this other zone (13) being moreover such that the second parameter (PA2) is incapable of having the same value twice in the course of the duration of the life of the object.

**14.** A portable electronic object according to claim 13, characterized in that the other zone intended to memorize the second parameter (PA2), is a PROM- type (120) or EPROM-type (150) memory zone.

**15.** A portable object according to claim 13, characterized in that the other zone (13) for memorizing the second parameter (PA2) is of the EEPROM type, and that the volatile memory zone (14) serving to memorize the first parameter (PA1) further comprises a field (ZT) reserved for temporarily memorizing the second parameter (PA2) at the time of its modification.

**16.** A portable object according to claim 13, characterized in that it comprises, memorized in a nonvolatile memory zone (12, 13), at least one datum specific to the portable object in question, constituting a third parameter (PA3) taken into account at the time of the generation of the random number.

**17.** A portable object according to claim 16, characterized in that the third parameter (PA3) is constituted by the serial number of the portable object.

**18.** A portable object according to claim 16, characterized in that the third parameter (PA3) is constituted by a secret diversified datum belonging to the portable object.

**19.** A portable object according to claim 13, characterized in that the first parameter (PA1) memorized in the field (RB) of the volatile zone (14) of the memory, following each calculation of a random number, is the random number itself.

**20.** A data processing system for implementing the method defined by one of claims 1 to 12, characterized in that it comprises a portable object (1) according to one of claims 13 to 19, and a processing apparatus (2) to which the portable object can be connected.

FIG.1

FIG.2

## FIG.5A

| PA 2 |
|---|
| 0 0 0 |
| 0 0 1 |
| 0 1 0 |
| 0 1 1 |
| 1 0 0 |
| 1 0 1 |
| 1 1 0 |
| 1 1 1 |

## FIG.5B

| PA21 | PA 22 |
|---|---|
| 0 0 0 | 0 0 0 |
| 0 0 0 | 0 0 1 |
| 0 1 0 | 0 0 1 |
| 0 1 0 | 0 1 1 |
| 1 0 0 | 0 1 1 |
| 1 0 0 | 1 0 1 |
| 1 1 0 | 1 0 1 |
| 1 1 0 | 1 1 1 |
| 0 0 0 | 1 1 1 |

RI

PA2

RB

PA1

31

DES   BUFFER

32

FIG.3

33

DES   BUFFER

34

PA3

DES   BUFFER

NOMBRE
ALEATOIRE

RB

TRANSFERER PA21  DANS  ZT1

TRANSFERER PA22 DANS  ZT2

CONTENU DE ZT1
≥?
CONTENU DE ZT2

OUI

NON

INCREMENTER  ZT1

INCREMENTER  ZT2

EFFACER  PA 22

EFFACER  PA 21

INSCRIRE CONTENU
DE ZT1 DANS PA22

INSCRIRE CONTENU
DE ZT2 DANS PA21

FIG.4

FIG.6A

FIG.7A

FIG.6B

FIG.7B